# EUROPÄISCHE PATENTSCHRIFT

(11) **EP 3 268 609 B1**
(45) Veröffentlichungstag und Bekanntmachung des Hinweises auf die Patenterteilung: **11.11.2020**
(21) Anmeldenummer: 16713592.0
(22) Anmeldetag: 02.03.2016
(51) Int. Cl.: F04B 49/02

(54) **VERFAHREN ZUR KOMPENSATION VON LECKAGEVERLUSTEN SOWIE FÖRDERSYSTEM ZUR FÖRDERUNG EINES DEFINIERTEN VOLUMENS EINER FLÜSSIGKEIT**
METHOD FOR COMPENSATING LEAKAGE LOSSES AND CONVEYOR SYSTEM FOR CONVEYING A DEFINED VOLUME OF A LIQUID
PROCÉDÉ DE COMPENSATION DES PERTES PAR FUITE AINSI QUE SYSTÈME DE TRANSPORT POUR TRANSPORTER UN VOLUME DÉFINI D'UN LIQUIDE

(30) Priorität: 10.03.2015 DE 102015103479
(43) Veröffentlichungstag der Anmeldung: 17.01.2018
(73) Patentinhaber: Sonderhoff Engineering GmbH, 6850 Dornbirn (AT)
(72) Erfinder: METZLER, Mario, 6890 Lustenau (AT); SCHWABL, Christian, 6900 Bregenz (AT); BALDAUF, Günter, 6914 Hohenweiler (AT)
(74) Vertreter: Hennicke, Ernst Rüdiger
(86) Internationale Anmeldenummer: PCT/IB2016/051176
(87) Internationale Veröffentlichungsnummer: WO 2016/142813

(56) Entgegenhaltungen:
- EP-A1- 2 631 207
- WO-A1-2012/003870
- DE-A1- 3 619 147
- DE-A1-102011 121 837
- DE-B3-102011 122 268
- DE-C1- 19 620 665
- FR-A1- 2 484 559
- FR-A1- 2 565 158
- GB-A- 2 230 876
- US-A- 4 089 170
- US-A1- 2014 326 322

## Beschreibung

Die Erfindung betrifft ein Verfahren zur Kompensation von Leckageverlusten in einem mindestens eine Verdrängerpumpe und mindestens ein Absperrorgan aufweisenden Leistungssystem für Flüssigkeiten, insbesondere bei der isobaren Dosierung von flüssigen Kunststoffkomponenten. Die Erfindung ist ferner auf ein Fördersystem zur insbesondere isobaren Förderung eines definierten Volumens einer Flüssigkeit pro Zeiteinheit gerichtet, insbesondere zur Dosierung einer flüssigen Kunststoffkomponente.

Bei der Verarbeitung der Komponenten von zwei- oder mehrkomponentigen Kunststoffsystemen kommt es darauf an, dass die Komponenten möglichst genau in einem festgelegten Mischungsverhältnis miteinander vermischt werden, um vollständig ausreagieren zu können. Die Vermischung der Komponenten erfolgt beispielsweise in einem Mischkopf mit einem drehend angetriebenen Rührer, wobei die zwei oder mehr Komponenten dem Mischkopf über Einlassventile zugeführt und im Inneren des Mischkopfes miteinander vermischt werden, bevor die Mischung dann über einen verschließbaren Auslass des Mischkopfes ausgetragen wird, beispielsweise, um mit der derart erzeugten Mischung auf einem Bauteil einen Materialstrang aufzutragen, der dann nach dem Ausreagieren der Mischung an dem Bauteil eine angeformte Dichtung bildet.

Die Komponenten werden mit dem Fördersystem zu dem Mischkopf mittels Verdrängerpumpen, insbesondere Zahnradpumpen, durch das Leitungssystem gefördert, wobei in Niederdrucksystemen, also Systemen, in denen der Druck der Komponenten bei Eintritt in den Mischkopf nur wenig größer ist als der Umgebungsdruck, die jeweiligen Fördervolumina durch Regelung der Drehzahl der Verdrängerpumpen gut handhabbar sind.

In Systemen, in denen die zu fördernden Flüssigkeiten unter höheren Drücken stehen, kommt es allerdings insbesondere im Bereich der Pumpen zu Leckageverlusten infolge des Druckgefälles gegenüber -der Eingangsseite der Pumpe, wobei sich diese Leckageverluste nicht nur bei ändernden Druckverhältnissen verstärken oder verringern können, sondern bei zunehmender Einsatzdauer der Pumpe aufgrund von Verschleiß größer werden. Eine gerade bei der Verarbeitung von mehrkomponentigen Kunststoffsystemen geforderte exakte Dosierung wird dann schwierig, da die Materialverluste durch die Leckagen quantitativ schwer abzuschätzen sind. Dies gilt insbesondere dann, wenn es zwischen einzelnen Dosierungen zu unterschiedlich langen Stillstands- oder Wartezeiten kommt, während derer das Absperrorgan das Leitungssystem absperrt, denn die Materialverluste sind bei sich ändernden Stillstandszeiten veränderlich.

Die DE 10 2011 122268 offenbart eine Dosiervorrichtung zur Zusammenführung zweier Medien über ein Ventilsystem in eine Mischkammer, wobei die zu mischenden Medien vorab in einen Arbeitsraum geleitet werden, von wo aus die Medien mittels eines Kolbens in die Mischkammer gedrückt werden.

Aufgabe der Erfindung ist es, ein Verfahren und ein Fördersystem zu schaffen, womit Leckageverluste bei Dosierung der Flüssigkeit auf besonders einfache Weise mit hoher Genauigkeit berücksichtigt werden können.

Nach dem erfindungsgemäßen Verfahren wird hierzu der Ist-Flüssigkeitsdruck in dem Leitungssystem mittels einer Druckmesseinrichtung ermittelt und bei geschlossenem Absperrorgan durch Betätigung der Verdrängerpumpe auf einen Druck-Sollwert geregelt. In besonders vorteilhafter Weiterbildung der Erfindung ist es dann möglich, die zur Erhaltung des Druck-Sollwerts bei geschlossenem Absperrorgan sich ergebende Verlust-Förderrate der Verdrängerpumpe einer Soll-Förderrate bei geöffnetem Absperrorgan zur Kompensation des bei dem betreffenden Druck-Sollwert auftretenden Leckageverlustes hinzuzufügen. Zur Durchführung dieses erfindungsgemäßen Verfahrens hat das Fördersystem nach der Erfindung ein Leitungssystem mit mindestens einer Verdrängerpumpe und mindestens einem Absperrorgan sowie eine den Ist-Flüssigkeitsdruck in dem Leitungssystem ermittelnde Druckmesseinrichtung und ein die Verdrängerpumpe in Abhängigkeit von dem ermittelten Ist-Flüssigkeitsdruck beaufschlagendes Regelsystem, einschließlich Mitteln zum Bestimmen einer Verlust-Förderrate der Verdrängerpumpe bei geschlossenem Absperrorgan zur Aufrechterhaltung eines Soll-Flüssigkeitsdrucks in dem Leitungssystem und vorzugsweise Mitteln zur Hinzufügung der Verlust-Förderrate zu einer Soll-Förderrate der Verdrängerpumpe bei geöffnetem Absperrorgan.

Der Erfindung liegt die Erkenntnis zugrunde, dass bei der Förderung von Flüssigkeiten wie beispielsweise flüssigen Kunststoffen oder Kunststoff-Komponenten unter konstantem Druck die im Leitungssystem auftretenden Leckageverluste im Wesentlichen (nur) von dem Druckniveau im System und der Viskosität der Flüssigkeit abhängen und somit zumindest weitestgehend unabhängig sind von dem momentan geförderten Volumenstrom. Sie treten somit in einem unter Druck stehenden Leitungssystem auch dann auf, wenn das Absperrorgan im Leitungssystem geschlossen ist, also zu Zeiten, in denen gar kein Material gefördert wird. Die Höhe der Leckageverluste kann in dem Betriebszustand, in dem eine Materialförderung gerade nicht stattfindet, also bei geschlossenem Absperrorgan, vergleichsweise einfach dadurch ermittelt werden, dass der Druck im Leitungssystem konstant auf einen Soll-Druck geregelt wird. Bei diesem Solldruck kann es sich insbesondere um den Förderdruck handeln, der während eines Dosiervorgangs herrschen soll. Den Solldruck im Leitungssystem erhält man dann aufrecht, wenn die Verdrängerpumpe weiter mit entsprechend reduzierter (Verlust-)Förderrate betrieben wird, so dass die Verluste durch Leckagen gerade ausgeglichen werden. Durch diese Maßnahme wird sichergestellt, dass beim Öffnen des Absperrorgans zu Beginn eines neuen Dosiervorgangs die Flüssigkeit sofort mit dem geforderten Druck und damit auch der korrekten Förderrate dem nachfolgenden Aggregat, beispielsweise einem Mischkopf zugeführt wird. Die sich dabei ergebende Verlust-Förderrate, also der Material-Volumenstrom pro Zeiteinheit, der von der Pumpe bei geschlossenem Absperrorgan in dem System gefördert wird und dieses als Leckageverlust an möglicherweise gar nicht überprüfbaren Stellen wieder verlässt, kann in besonders bevorzugter Weiterbildung des erfindungsgemäßen Verfahrens der Soll-Förderrate bei geöffnetem Absperrorgan, also beispielsweise einem geöffnetem Einlassventil an einem Mischkopf, als Kompensationsgröße aufgeschaltet werden, da davon ausgegangen werden kann, dass der Leckageverlust pro Zeiteinheit auch während der Förderung des Materials durch das Leitungssystem gleichbleibt, wenn sich der Druck in dem System während des Fördervorgangs gegenüber dem Druck im System bei abgeschlossenem Absperrorgan nicht oder nicht nennenswert ändert. Die somit im stationären Zustand des Systems bei geschlossenem Absperrorgan zu ermittelnden Werte von tatsächlich auftretenden Leckageverlusten können mit der Erfindung also auch während der Materialförderung berücksichtigt werden, womit eine besonders genaue Volumen- bzw. Mengenförderung möglich wird.

Als Verdrängerpumpe kommt bei der Erfindung vorzugsweise eine Umlaufverdrängermaschine, insbesondere eine Zahnradpumpe zum Einsatz. Das Leitungssystem weist vorzugsweise zumindest zwischen der Verdrängerpumpe und dem Absperrorgan ein wenigstens weitestgehend konstantes Volumen auf.

Das erfindungsgemäße Verfahren kann in vorteilhafter Weise auch bei der Förderung von thixotropen Flüssigkeiten Anwendung finden, also Flüssigkeiten, deren Viskosität im bewegten Zustand (unter Scherbeanspruchung) geringer ist als im Ruhezustand. Beispielsweise zeigen manche Polyolkomponenten ein derartiges, thixotropes Materialverhalten, indem ihre Viskosität unter Scherung stark absinkt und - abhängig von der Länge der Stillstands- oder Wartezeiten - wieder deutlich ansteigt. Dies führt bei unterschiedlich langen Wartezeiten gegebenenfalls zu unterschiedlichen Anfangsviskositäten der Flüssigkeit bei Beginn eines Dosiervorgangs und damit zu Abweichungen beim Start der Dosierung.

Um diesen Effekt abhängig von der Länge der Stillstandzeit kompensieren zu können, kann der Drucksollwert in vorteilhafter Weiterbildung der erfindungsgemäßen Regelung in zwei Teile zerlegt werden. Der Druck-Sollwert besteht hierbei aus einem Grunddruck (z.B. dem Soll-Druck während eines Dosiervorgangs) zuzüglich einem zeitabhängigen Offsets. Dieses Offset kann als klassisches PT1 Glied aus der Regelungstechnik ausgeführt werden, womit sich die Viskositätszunahme in Abhängigkeit von der Dauer der Stillstandszeit zwischen den Dosierungen sehr gut beschreiben lässt.

Wenn beispielsweise während der Förderung einer thixotropen Flüssigkeit unter Einfluss der Scherwirkung ein (Soll-)Druck von 50 bar in der strömenden Flüssigkeit vorliegt, ist es nach einer längeren Wartezeit, während der die Flüssigkeit nicht strömt und sich ihre Viskosität erhöht, erforderlich, den Anfangsdruck zu Beginn eines neuen Förder- bzw. Dosiervorgangs zur Kompensation der höheren Viskosität kurzzeitig zu erhöhen, beispielsweise auf einen (Anfangs-)Druck von 52 bar. Würde nämlich das Absperrorgan bei einem Vorspanndruck von lediglich 50 bar öffnen, würde dies zu einer leichten Verzögerung des Dosierstarts führen. Um dies zu vermeiden, wird der Sollwert der Stillstandsdruckregelung zeitabhängig auf einen erhöhten Anfangs-Solldruck, beispielsweise 52 bar, erhöht. Dabei nähert sich der Anfangs-Solldruck mit zunehmender Stillstands- oder Wartezeit vorzugsweise logarithmisch einem Maximalwert an.

Die Erfindung wird nachstehend im Zusammenhang mit dem in den Zeichnungen dargestellten, bevorzugten Ausführungsbeispiel näher erläutert. Die einzige **Figur** zeigt ein erfindungsgemäßes Fördersystem an einem dynamischen Mischkopf zum Vermischen von Polyurethan- oder Silikonkunststoffkomponenten für die Herstellung eines aufschäumenden Dichtungsmaterials in einem Fließschema.

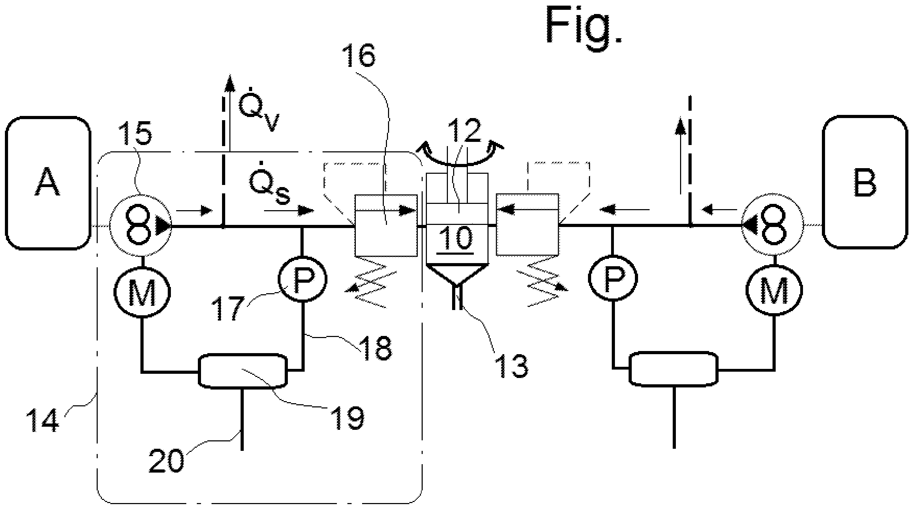

Das in der Zeichnung dargestellte Fördersystem 10 dient zur Dosierung von zwei flüssigen Kunststoffkomponenten A, B zu einem Mischkopf 11, in dem die beiden Komponenten A, B mittels eines angetriebenen Rührers 12 in genau festgelegtem Mengenverhältnis miteinander vermischt und dann mit einem im System gegenüber der Umgebung herrschenden Überdruck als reaktives Gemisch über einen Auslass 13 ausgetragen werden. Erst mit dem Austritt der Mischung aus dem Auslass wird ihr der Umgebungsdruck aufgeprägt, d.h. der Druck im Inneren des Mischkopfes ist wenigstens etwas höher als Umgebungsdruck. Mit derartigen Systemen werden beispielsweise unmittelbar an einem Bauteil angeformte, aufschäumende Dichtungen hergestellt.

Für jede der beiden Komponenten A, B ist ein im Wesentlichen gleich aufgebautes Leitungssystem 14 vorgesehen. Dieses hat eine motorisch angetriebene Zahnradpumpe 15 und ein am Mischkopf 11 angeordnetes Absperrorgan 16 in Form eines elektromagnetisch schaltbaren Ventils, mit dem der Einlass für die jeweilige Komponente A,B ins Mischkopfinnere geöffnet oder geschlossen werden kann.

Zum Starten eines Dosiervorgangs werden die beiden Ventile 16 geöffnet, so dass mittels der Zahnradpumpen 15 die Komponenten A, B aus ihren jeweiligen Vorratsbehältern 17 im gewünschten Mischungsverhältnis in den Mischkopf 11 gefördert, dort mit dem Rührer 12 unter Aufrechterhaltung des in dem Leitungssystem 14 herrschenden Drucks miteinander vermischt und dann über den Auslass 13 als reaktive Kunststoffmischung ausgetragen werden.

Zur Kompensation von Leckageverlusten, die in dem Leitungssystem 14 durch nie zu vermeinende Undichtigkeiten beispielsweise im Bereich der Pumpe 15 auftreten und die in der schematischen Zeichnung durch die Pfeile an den gestrichelten Linien als Qv dargestellt sind, sind die Leitungssysteme 14 jeweils mit einer Druckmesseinrichtung 17 versehen, die den Systemdruck in dem Leitungssystem 14 bei geschlossenem Ventil 16 ermittelt. Dieser Ist-Flüssigkeitsdruck 18 wird in einem Komparator 19 mit einem Druck-Sollwert 20 verglichen. Sobald ein Druckabfall festgestellt wird, der Ist-Flüssigkeitsdruck gegenüber dem Druck-Sollwert also abfällt, wird die Zahnradpumpe 15 auch bei geschlossenem Ventil 16 mit entsprechend geringer (Verlust-) Förderrate betätigt, um genau die Menge in das Leitungssystem 14 zu fördern, die aus dem System durch die Leckage Qv verloren geht.

Diese Verlust-Förderrate, die von der Pumpe 15 mit wenigen Umdrehungen pro Zeiteinheit erbracht wird, wird auch bei geöffnetem Absperrorgan während des Fördervorgangs zum Mischkopf berücksichtigt, d.h., die Zahnradpumpe wird zur Kompensation der Leckageverluste Qv mit einer solchen Drehzahl betrieben, dass sie aus dem Verratsbehälter der betroffenen Komponente einen Mengenstrom abzieht, der der Summe aus dem bei geschlossenem Ventil festgestellten Leckageverlust Qv und der Soll-Förderrate Qs der betreffenden Komponente entspricht. Auf diese Weise wird der Leckageverlust auch bei der Dosierung der Komponenten zum Mischkopf berücksichtigt.

## Patentansprüche

1. Verfahren zur zumindest weitgehend isobaren Dosierung von flüssigen Kunststoffkomponenten zu einem Mischkopf, bei dem die Komponenten dem Mischkopf mittels eines mindestens eine Verdrängerpumpe und mindestens ein Absperrorgan aufweisenden Leitungssystems für Flüssigkeiten zudosiert werden, wobei zur Kompensation von Leckageverlusten in dem Leitungssystem der Ist-Flüssigkeitsdruck (18) in dem Leitungssystem (14) mittels einer Druckmesseinrichtung (17) ermittelt und bei geschlossenem Absperrorgan (16) durch Betätigung der Verdrängerpumpe (15) auf einen Druck-Sollwert (20) geregelt wird,und wobei die zur Erhaltung des Druck-Sollwerts (20) bei geschlossenem Absperrorgan (16) sich ergebende Verlust-Förderrate (Qv) der Verdrängerpumpe (15) einer Soll-Förderrate (Qs) zur Kompensation des bei dem betreffenden Druck-Sollwerts (20) auftretenden Leckageverlustes hinzugefügt wird.

2. Verfahren nach Anspruch 1, **dadurch gekennzeichnet** als Verdrängerpumpe (15) eine Umlaufverdrängermaschine, insbesondere eine Zahnradpumpe verwendet wird.

3. Verfahren nach Anspruch 1 oder 2, **dadurch gekennzeichnet** das Leitungssystem (14) zumindest zwischen der Verdrängerpumpe (15) und dem Absperrorgan (16) ein wenigstens weitestgehend konstantes Volumen aufweist.

4. Verfahren nach einem der Ansprüche 1 bis 3, **dadurch gekennzeichnet, dass** zur Kompensation eines thixotropen Fließverhaltens der Flüssigkeit der Druck-Sollwert (20) bei geschlossenem Absperrorgan (16) im Vergleich zu dem Druck-Sollwert während eines Fördervorgangs bei geöffnetem Absperrorgan erhöht wird.

5. Verfahren nach Anspruch 4, **dadurch gekennzeichnet, dass** die Regelung zur Anhebung und/oder Absenkung des Druck-Sollwerts (20) zeitabhängig nach Art eines PT1-Glieds erfolgt.

6. Fördersystem zur zumindest weitgehend isobaren Dosierung von flüssigen Kunststoffkomponenten zu einem Mischkopf (11), mit einem Leitungssystem (14), das mindestens eine Verdrängerpumpe (15) und mindestens ein den Einlass in den Mischkopf (11) öffnendes oder schließendes Absperrorgan (16) aufweist , mit einer den Ist-Flüssigkeitsdruck (18) im Leitungssystem (14) ermittelnden Druckmesseinrichtung (17) und mit einem die Verdrängerpumpe (15) in Abhängigkeit von dem ermittelten Ist-Flüssigkeitsdruck beaufschlagenden Regelsystem, einschließlich Mitteln zum Bestimmen einer Verlust-Förderrate (Qv) der Verdrängerpumpe (15) bei geschlossenem Absperrorgan (16) zur Aufrechterhaltung eines Soll-Flüssigkeitsdrucks (20) in dem Leitungssystem (14) und Mitteln zur Hinzufügung der Verlust-Förderrate (Qv) zu einer Soll-Förderrate (Qs) bei geöffnetem Absperrorgan.

## Claims

1. A method for the at least largely isobaric metering of liquid plastics components to a mixing head, in which the components are metered to the mixing head by means of a line system for liquids that has at least one positive displacement pump and at least one shut-off member, wherein the actual liquid pressure (18) in the line system (14) is ascertained by means of a pressure measuring device (17) in order to compensate for leakage losses in the line system and, when the shut-off member (16) is closed, said pressure is adjusted to a target pressure value (20) by actuating the positive displacement pump (15), and wherein the delivery loss rate (Qv) of the positive displacement pump (15) which occurs so as to maintain the target pressure value (20) when the shut-off member (16) is closed is added to a target delivery rate (Qs) in order to compensate for the leakage loss that occurs at the target pressure value (20) in question.

2. The method according to claim 1, **characterized in that** a rotary displacement machine, in particular a gear pump, is used as the positive displacement pump (15).

3. The method according to claim 1 or 2, **characterized in that** the line system (14) has an at least largely constant volume at least between the positive displacement pump (15) and the shut-off member (16).

4. The method according to one of claims 1 to 3, **characterized in that**, in order to compensate for the thixotropic flow behavior of the liquid, the target pressure value (20) with the shut-off member (16) closed is increased by comparison with the target pressure value during a delivery process with the shut-off member open.

5. The method according to claim 4, **characterized in that** the adjustment for raising and/or lowering the target pressure value (20) is made as a function of time in the manner of a PT1 element.

6. A delivery system for the at least largely isobaric dosing of liquid plastics components to a mixing head (11), comprising a line system (14) which has at least one positive displacement pump (15) and at least one shut-off member (16) that opens or closes the inlet into the mixing head (11), a pressure measuring device (17) which ascertains the actual liquid pressure (18) in the line system (14), and a control system which acts on the positive displacement pump (15) according to the ascertained actual liquid pressure, which system includes means for determining a delivery loss rate (Qv) of the positive displacement pump (15) when the shut-off member (16) is closed so as to maintain a target liquid pressure (20) in the line system (14) and means for adding the delivery loss rate (Qv) to a target delivery rate (Qs) when the shut-off member is open.

## Revendications

1. Procédé de dosage au moins largement isobare de composantes de matière plastique liquides dans une tête de mélange, dans lequel les composantes sont dosées dans la tête de mélange au moyen d'un système de conduite pour liquides présentant au moins une pompe volumétrique et au moins un organe d'arrêt, la pression de liquide réelle (18) dans le système de conduite (14) étant déterminée au moyen d'un appareil de mesure de pression (17) afin de compenser les pertes par fuite dans le système de conduite et étant régulée à une valeur de pression de consigne (20) par actionnement de la pompe volumétrique (15) lorsque l'organe d'arrêt (16) est fermé, et un débit de transport de consigne (Qs) destiné à compenser les pertes par fuite qui se produisent à la pression de consigne (20) concernée étant ajouté au débit de transport de perte (Qv) de la pompe volumétrique (15) qui résulte du maintien de la valeur de pression de consigne (20) lorsque l'organe d'arrêt (16) est fermé.

2. Procédé selon la revendication 1, **caractérisé en ce qu'**une machine volumétrique rotative, en particulier une pompe à engrenages, est utilisée comme pompe volumétrique (15).

3. Procédé selon la revendication 1 ou 2, **caractérisé en ce que** le système de conduite (14) présente un volume au moins dans la plus large mesure constant au moins entre la pompe volumétrique (15) et l'organe d'arrêt (16).

4. Procédé selon l'une des revendications 1 à 3, **caractérisé en ce que**, pour compenser un comportement d'écoulement thixotropique du liquide, la valeur de pression de consigne (20), lorsque l'organe d'arrêt (16) fermé, est augmentée par rapport à la valeur de pression de consigne pendant un processus de transport lorsque l'organe d'arrêt est ouvert.

5. Procédé selon la revendication 4, **caractérisé en ce que** la régulation de l'augmentation et/ou de la diminution de la valeur de pression de consigne (20) est effectuée en fonction du temps, à la manière d'un élément PT1.

6. Système de transport pour le dosage au moins largement isobare de composantes de matière plastique liquides dans une tête de mélange (11), comportant un système de conduite (14) qui présente au moins une pompe volumétrique (15) et au moins un organe d'arrêt (16) ouvrant ou fermant l'entrée dans la tête de mélange (11), comportant un appareil de mesure de pression (17) déterminant la pression de liquide réelle (18) dans le système de conduite (14) et comportant un système de régulation agissant sur la pompe volumétrique (15) en fonction de la pression de liquide réelle déterminée, comprenant des moyens pour déterminer un débit de transport de perte (Qv) de la pompe volumétrique (15) lorsque l'organe d'arrêt (16) est fermé afin de maintenir une pression de liquide de consigne (20) dans le système de conduite (14) et des moyens pour ajouter le débit de transport de perte (Qv) à un débit de transport de consigne (Qs) lorsque l'organe d'arrêt est ouvert.
